Europäisches Patentamt

European Patent Office

Office européen des brevets

(11) Veröffentlichungsnummer: **0 438 653 B1**

(12) **EUROPÄISCHE PATENTSCHRIFT**

(45) Veröffentlichungstag der Patentschrift: **16.08.95**

(51) Int. Cl.⁶: **G02B 6/18**

(21) Anmeldenummer: **90121872.7**

(22) Anmeldetag: **15.11.90**

(54) **Flexible optische Gradientenprofilfaser zur Übertragung von Laserstrahlung mit hoher Leistung bei weitgehender Erhaltung der Modenstruktur.**

(30) Priorität: **23.01.90 DE 4001781**

(43) Veröffentlichungstag der Anmeldung:
**31.07.91 Patentblatt 91/31**

(45) Bekanntmachung des Hinweises auf die
Patenterteilung:
**16.08.95 Patentblatt 95/33**

(84) Benannte Vertragsstaaten:
**CH DE FR GB IT LI**

(56) Entgegenhaltungen:
**FR-A- 2 312 787**
**GB-A- 2 140 169**
**US-A- 4 111 525**

**JEE JOURNAL OF ELECTRONIC ENGINEE-RING, Band 23, Nr. 240, Dezember 1986, Seiten 57-61, Tokyo JP; T. HARADA: "Precision machining technology by YAG laser using a fiber-optic system"**

(73) Patentinhaber: **Schott Glaswerke**
**Hattenbergstrasse 10**
**D-55122 Mainz (DE)**

(84) Benannte Vertragsstaaten:
**CH DE FR IT LI**

(73) Patentinhaber: **Carl-Zeiss-Stiftung trading as SCHOTT GLASWERKE**
**Hattenbergstrasse 10**
**D-55122 Mainz (DE)**

(84) Benannte Vertragsstaaten:
**GB**

(72) Erfinder: **Bader, Christian Hubert, Dr.**
**Gürtlerstrasse 45**
**W-6500 Mainz (DE)**
Erfinder: **Nattermann, Kurt, Dr.**
**Im Brühl 7**
**W.-6507 Ingelheim (DE)**
Erfinder: **Rütze, Uwe**
**Westring 36**
**W-6500 Mainz (DE)**

## Beschreibung

Die Erfindung betrifft eine flexible optische Faser nach dem Oberbegriff des Patentanspruchs 1. Eine solche Faser ist in der Zeitschrift "Journal of Electronic Engineering 23", (1986 Dec. ), No. 240 auf den Seiten 57-61 beschrieben.

Es gibt eine Vielzahl von Lasern für den sichtbaren, nah-infraroten und nah-ultravioletten Spektralbereich. Z.B. strahlen die Nd:YAG-Laser bei der Wellenlänge von 1,064 $\mu$m, ihre Ausgangsleistung kann im Dauerstrichbetrieb 100 W übersteigen, im gepulsten Betrieb kann die Spitzenleistung viele MW betragen. Viele dieser Laser strahlen in Moden mit niedriger Ordnung, wobei häufig sog. Gaußmoden oder ähnliche Moden vorkommen.

Zum Ordnen der Moden dient die verallgemeinerte Modenordnung $m$. Für Gauß-Hermite-Moden (typisch für Laser mit "kartesischer Geometrie") z.B. ist $m = n_x + n_y + 1$, wobei $n_x$ und $n_y$ die Modenordnung bzgl. der x- und y-Achse sind: $n_x$ bzw. $n_y$ ist die Anzahl der Knoten in der Intensitätsverteilung senkrecht zur Strahlachse in x- bzw. y-Richtung. Für Gauß-Laguerre-Moden (bei Zylindersymmetrie) ist $m = 2 \cdot p + \ell + 1$, wobei $p$ und $\ell$ die radiale und azimutale Modenordnung sind. Diese Klassifizierung ist dem Fachmann bekannt, er wendet sie sinngemäß auch dann an, wenn es sich bei den Moden nicht um Gaußmoden handelt.

Bei Lasern mit hoher Leistung liegt fast immer $m > 1$ vor. Dann läßt es sich kaum erreichen, daß nur ein Mode auftritt - die Laser wechseln während des Betriebs den Mode oder strahlen zugleich in mehreren Moden. Es gibt aber eine obere Grenze $o$ für die verallgemeinerte Modenordnung $m$ der Strahlung eines Lasers, etwa weil höhere Moden sich aufgrund seiner Resonatorkonfiguration nicht ausbilden. Die Zahl $o$ wird als maximale Modenordnung der Strahlung bezeichnet. Die Gesamtzahl der Moden, in denen der Laser strahlen kann, skaliert etwa wie $\sim o^2$.

Für die Anwendungen, z.B. in der Materialbearbeitung, ist eine niedrige Modenordnung meistens vorteilhaft, u.a. weil sich die Strahlung auf kleine Brennflecke fokussieren läßt oder optische Systeme zur Abbildung der Strahlung sich einfacher gestalten lassen. Man verbindet die Modenordnung daher oft mit dem Begriff der Strahlqualität: Die Qualität der Laserstrahlung ist um so höher, je kleiner die Modenordnung ist und auf je weniger Moden sie verteilt ist. Für viele Anwendungen von Lasern mit hoher Leistung ist z.B. die Strahlqualität ausreichend, wenn die maximale Modenordnung $o$ kleiner als etwa 10 ist.

Zur Übertragung der Laserstrahlung mit hoher Leistung sind oft flexible Fasern erforderlich. Diese Fasern müssen nicht nur hohe Strahlungsleistungen übertragen können, sie sollen insbesondere die Modenstruktur der Strahlung nicht verschlechtern, also z.B. die durch den Laser vorgegebene maximale Modenordnung möglichst wenig erhöhen. Fasern zur Übertragung von Laserstrahlung sind an sich bekannt, die bekannten Fasern zeigen aber bei der Übertragung von Strahlung mit hoher Leistung oder guter Modenstruktur erhebliche Mängel.

Zur Übertragung eines Grundmodes ($o = 1$) eignen sich Monomodefasern. Diese können als Gradientenprofilfasern ausgeführt sein, z.B. als Potenzprofilfasern mit dem Brechzahlprofil

$$n_k{}^2(r) = n_{ki}{}^2 - (n_{ki}{}^2 - n_{ka}{}^2) \cdot (2 \cdot r/D_k)^g \text{ für } r < D_k/2 \quad (1)$$

mit dem Exponenten g ($n_{ki}$: Brechzahl in der Fasermitte; $n_{ka}$ Brechzahl an der Grenzfläche zum Fasermantel, $n_{ki} > n_{ka}$; r: Abstand von der Faserachse; $D_k$: Durchmesser des Faserkerns), in der Praxis werden aber Stufenindexfasern bevorzugt. Jedoch können Monomodefasern keine Moden mit höherer Ordnung übertragen, und wegen ihres kleinen Kerndurchmessers, in der Regel nur wenige $\mu$m, können sie auch keine hohen Strahlungsleistungen übertragen. Fasern zur Übertragung von Strahlung mit hoher Leistung in Moden mit höherer Ordnung müssen Multimodefasern sein, ihr Kerndurchmesser beträgt wenigstens einige 10 $\mu$m.

Flexible Multimode-Stufenindexfasern zur Übertragung von Laserstrahlung mit hoher Leistung sind bekannt (Schott Produktinformation 1024e, "Special fibers made of quartz glass", 1989, Schott Glaswerke, Mainz). Multimode-Stufenindexfasern sind jedoch zur Übertragung von Strahlung mit guter Modenstruktur untauglich, weil ihre Fasermoden (Strahlungszustände in der Faser bezeichnet man als Fasermoden) sich stark von den Lasermoden unterscheiden. Bei der Einkopplung der Strahlung wird in der Regel eine Vielzahl von Fasermoden angeregt.

Es wird angenommen, daß $r^2$-Fasern Strahlung in Moden mit höherer Ordnung, insbesondere Gaußmoden, übertragen können (J.A. Arnaud, "Beam and Fiber Optics", Academic Press, New York, 1975, ISBN 0-12-063250-0). Im Kern zylindrischer $r^2$-Fasern folgt die Ortsabhängigkeit der Brechzahl der Beziehung

$$n_k{}^2(r) = n_{ki}{}^2 - (n_{ki}{}^2 - n_{ka}{}^2) \cdot (2 \cdot r/D_k)^g = n_{ki}{}^2 \cdot (1 - (f \cdot r)^g)$$
$$\text{mit } g = 2 \quad (2)$$

(r: Abstand von der Faserachse; $D_k$: Kerndurchmesser; $n_{ki}$, $n_{ka}$: Brechzahl im Fasermittelpunkt und an der Grenzfläche zum Mantel, $n_{ka} < n_{ki}$; f: spezifische Konvergenz , ein Maß für die Krümmung des Brechzahlprofils). Obwohl der zur Realisierung bestimmter Brechzahlprofile in Fasern betriebene Aufwand sehr groß ist (K.W. Raine, J.G.N. Baines, D.E.

Putland, "Refractive Index Profiling - State of the Art", J. Lightw. Techn. $\underline{7}$, 1162-1169, 1989), wurde ein ausreichend gutes $\overline{r^2}$- Gradientenprofil bisher noch nicht erreicht.

Multimodefasern mit "$r^2$-ähnlichen" Gradientenprofilen sind bekannt. Die US-PS 38-23-997 beschreibt z.B. eine Faser für nachrichtentechnische Anwendungen, deren Brechzahlprofil hinsichtlich der Verminderung der modalen Laufzeitstreuung (Abhängigkeit der Laufzeit von Fasermoden von der Modenordnung) optimiert ist. Für den Exponenten des Brechzahlprofils dieser Faser gilt $g \approx 2 - (n_{ki}-n_{ka})/n_{ki}$, g hat praktisch den Wert 2. Die DE-PS 27-45-715 beschreibt eine Faser mit $g \approx 1,92$ für die gleiche Anwendung, für die Materialien vorgeschlagen werden: der Kern der Faser besteht aus $GeO_2$- und $P_2O_5$-dotiertem $SiO_2$. Solche "Nachrichtenfasern" sind zur Übertragung von hohen Strahlungsleistungen ungeeignet, weil der Radius der Fasermoden zu klein ist. Außerdem verschlechtern diese Fasern die Modenstruktur der Strahlung durch die Übertragung, weil die Fasermoden nur wenig den Lasermoden entsprechen. Und selbst wenn bei der Einkopplung der Strahlung in diese Fasern nur wenige Fasermoden angeregt werden, ist aufgrund der starken Kopplung von Strahlungsleistung zwischen den Fasermoden die Strahlung am Faserende unselektiv auf viele Fasermoden verteilt.

Um die Strahlung sicher im Faserkern einzuschließen und die modale Laufzeitstreuung gering zu halten, wird bei den bekannten Fasern üblicherweise die Brechzahldifferenz im Kern groß gewählt. Bei den Gradientenprofilfasern aus Glas auf $SiO_2$-Basis zur Übertragung von Strahlung im nah-ultravioletten bis nah-infraroten Spektralbereich beträgt $\Delta n_k$ häufig mehr als $20 \cdot 10^{-3}$ oder sogar mehr als $30 \cdot 10^{-3}$. Große Werte für $\Delta n_k$ erfordern Zusammensetzungen bzw. Herstellungsverfahren für die Faser, die ein genaues Einstellen des Brechzahlprofils nicht zulassen oder zu anderen Nachteilen führen.

Die DE-PS 32-61-536 beschreibt z.B. eine Faser, in deren Kern ein Brechzahlprofil durch eine radial veränderliche Dotierung mit Metalloxiden (MgO, SrO, BaO usw.) hervorgerufen wird. Diese Faser ist aber nur im Spektralbereich von 1100 nm bis 1500 nm ausreichend durchlässig.

Für Fasern zur Übertragung von Strahlung vom nah-ultravioletten bis nah-infraroten Spektralbereich werden mit Innenbeschichtungs-CVD-Verfahren bevorzugt $GeO_2$-, $P_2O_5$-, $B_2O_3$- oder F-Dotierungen in $SiO_2$-Glasrohre eingebracht. $GeO_2$-, oder $P_2O_5$-Dotierungen und Gemische dieser Dopanden wirken im $SiO_2$-Glas brechzahlerhöhend, $B_2O_3$- oder F-Dotierungen und deren Gemische brechzahlsenkend. Aus einer ortsabhängigen Dotierung folgt eine ortsabhängige Brechzahl im Rohr, durch Kollabieren des Rohrs entsteht ein Glasstab, durch Ausziehen dieser sog. Faservorform die Faser.

Die $B_2O_3$-Dotierung kann Absorptionsbanden hervorrufen oder die mechanische Festigkeit der Fasern verschlechtern. Zur Senkung der Brechzahl wird deshalb die F-Dotierung bevorzugt. Da aber die Brechzahlabsenkung durch Fluor im $SiO_2$-Glas gering ist und der maximale F-Anteil klein bleiben muß, werden Fasern, in denen das Brechzahlprofil nur durch eine F-Dotierung des Kerns eingestellt wird, nicht verwendet.

Üblicherweise wird das Brechzahlprofil in der Faser durch eine Brechzahlerhöhung erzeugt und dazu der Kern mit $GeO_2$ oder $P_2O_5$ ortsabhängig dotiert. Insbesondere die $GeO_2$-Dotierung wird bevorzugt, weil ihr Anteil im $SiO_2$-Glas hoch sein kann und sie die Brechzahl stark anhebt. Es sind auch Fasern bekannt, deren Mantel zusätzlich mit Fluor dotiert ist, um eine größere Brechzahldifferenz zwischen Kern und Mantel zu erreichen. Die EP-PA 01-25-828 beschreibt eine Faser mit einem stark $GeO_2$-dotierten Kern, deren Mantel in einer dünnen Schicht um den Kern stark mit Fluor dotiert ist, wobei der F-Anteil in dieser Schicht konstant ist bzw. radial von innen nach außen abnimmt.

Obwohl der Einfluß der Dopanden auf die Brechzahl gegenläufig ist, kommt es vereinzelt vor, daß der Kern sowohl mit $GeO_2$ oder $P_2O_5$ und mit Fluor dotiert ist; die Gründe dafür sind aber nicht im Brechzahlprofil zu finden. Bei der in der EP-PS 01-60-244 beschriebenen Faser z.B. bewirkt eine zusätzliche Fluor-Dotierung des hauptsächlich mit $GeO_2$ oder $P_2O_5$ dotierten Kerns eine niedrigere Grundabsorption im UV-Bereich. Die EP-OS 01-91-202 beschreibt eine Faser, deren Kern bestimmte Dopanden, u.a. auch Fluor, enthält, um den sog. Zieh-Beitrag zur Rayleighstreuung der Faser zu reduzieren - diese "unreineren" Fasern haben aber eine geringere Zerstörschwelle und sind deshalb zur Übertragung hoher Strahlungsleistungen ungeeignet.

Bei Innenbeschichtungsverfahren mit $GeO_2$ oder $P_2O_5$ tritt regelmäßig ein "Brechzahl-Dip", ein Absinken der Brechzahl in der Fasermitte, auf. Der Dip entsteht beim Kollabieren der Glasrohre durch Verdampfen der Dotierungsstoffe, weil ihr Dampfdruck höher ist als der Dampfdruck des $SiO_2$. Der Dip führt deshalb zu einer starken Kopplung zwischen den Fasermoden und damit zu einer Verminderung der Strahlqualität. Durch sorgfältiges Kollabieren kann man den Dip reduzieren. Z.B. ist es aus der DE-PS 34-19-835 bekannt, das Innere der Rohre beim Kollabieren einem Dampf mit definierter Zusammensetzung derart auszusetzen, daß der Dip klein ist. Oft wird auch versucht, den Dip dadurch zu unterdrücken, daß man das beim Kollabieren abdampfende Material schon bei der Dotierung berücksichtigt. Insgesamt arbeiten diese Verfahren jedoch nur wenig reproduzierbar.

Der Brechzahl-Dip ließe sich vermeiden, wenn man die Faservorformen mit Außenbeschichtungs- oder Sinterverfahren herstellen würde, wie es z.B. in der EP-PS 01-75-067 beschrieben wird. Diese Verfahren haben jedoch den Nachteil, daß man mit ihnen das Brechzahlprofil nicht fein genug einstellen kann oder daß das Fasermaterial nicht rein genug ist, um mit den Fasern Laserstrahlung mit hoher Leistung zu übertragen.

Die DE-PS 28-37-338 beschreibt eine Multimodefaser für nachrichtentechnische Anwendungen, bei der durch eine geeignete Gestaltung des Brechzahlprofils außerhalb des Dips der Einfluß des Dips kompensiert wird. Diese Faser ist aber ebenfalls nicht zur Übertragung von Laserstrahlung mit hoher Leistung und guter Modenstruktur geeignet.

Der Erfindung liegt die Aufgabe zugrunde, eine Faser zur Übertragung von Strahlung mit hoher Strahlungsleistung zu schaffen, bei welcher die Modenstruktur der ausgekoppelten Strahlung im Vergleich zur Modenstruktur der in die Faser eingekoppelten Strahlung möglichst gut erhalten bleibt, die insbesondere Gauß-Moden gut übertragen kann und die einfach herzustellen ist.

Diese Aufgabe wird durch die in Patentanspruch 1 beschriebene Faser gelöst.

Die Erfindung wird anhand einer im wesentlichen zylindrischen Faser beschrieben, weil zylindrische Fasern für die wichtigen Anwendungsfälle ausreichen und weil sie sich am einfachsten herstellen lassen. Die Anleitungen gelten aber ohne wesentliche Änderungen auch für Fasern mit nichtkreisförmigem Querschnitt. Die erfindungsgemäße Faser hat einen im wesentlichen zylindrischen Kern, um den sich ein Mantel aus einer oder mehreren Schichten befindet, der zum Kern im wesentlichen konzentrisch ist. Kern und Mantel führen die Strahlung in der Faser. Die etwas willkürliche Unterscheidung der strahlungsführenden Zonen der Faser in Kern und Mantel ist üblich und dem Fachmann vertraut.

Die Strahlung wird hauptsächlich im Kern geführt. Deshalb muß die Strahlungsdämpfung (Absorption und Streuung) durch das Kernmaterial niedrig sein. Welcher Dämpfungskoeffizient für das Kernmaterial dabei zulässig ist, hängt von der erforderlichen Faserlänge ab. Das Finden geeigneter Materialien mit ausreichend niedrigen Dämpfungswerten ist i. allg. kein Problem.

Das Brechzahlprofil im Kern der Faser folgt weitgehend der Beziehung:

$$n_k^2(r) = n_{ki}^2 - (n_{ki}^2 - n_{ka}^2) \cdot (2 \cdot r/D_k)^g \text{ für } r < D_k/2 \ . \ (3)$$

Dabei ist g der Exponent des Brechzahlprofils dieser Faser, r der Abstand von der Faserachse, $D_k$ der Kerndurchmesser, $n_{ki}$ die Brechzahl in der Achse (r = 0) und $n_{ka}$ die Brechzahl im Kern unmittelbar an der Grenzfläche zum Mantel (r = $D_k/2$). Um die Strahlung sicher im Kern führen zu können, ist $n_{ki}$ größer als $n_{ka}$. Das Brechzahlprofil ähnelt dem nach Gl. (1) für die Potenzprofil-Monomodefasern. Die erfindungsmäßige Faser ist aber eine Multimodefaser mit einem Kerndurchmesser $D_k$ von mindestens 200 $\mu$m, damit sie Strahlung in Moden mit höherer Ordnung übertragen kann und damit der Radius der Fasermoden ausreichend groß ist, um mit der Faser hohe Strahlungsleistungen übertragen zu können.

Für den Radius der Fasermoden sind große Werte günstig, damit bei Fluktuationen der Laserleistung die Intensität im Kern nicht den Schadensgrenzwert der Kernmaterialien überschreitet und die Faser beschädigt. Außerdem ist es bei einem kleinen Radius der Fasermoden schwierig, bei der Einkopplung den Radius der Strahlungsmoden präzise an den Radius der Fasermoden anzupassen, wie es für eine Übertragung mit hoher Strahlqualität notwendig ist. Der Radius der Fasermoden nimmt zu, wenn man den Kerndurchmesser der Faser vergrößert. Der Kerndurchmesser $D_k$ beträgt deshalb bevorzugt mehr als 300 $\mu$m.

Für einen Kerndurchmesser von mehr als 800 $\mu$m ist die Faser mechanisch unbrauchbar. Meistens wird ein dünnerer Kern bevorzugt, weil sich dann um den Kern noch ein dicker Mantel befinden kann, der ihn vor äußeren Einflüssen abschirmt, ohne daß die Flexibilität der Faser beeinträchtigt wird. Ein dünnerer Kern ist auch fertigungstechnisch günstig, z.B. weil dann die Wandstärke des Ausgangs-Glasrohrs bei Innenbeschichtungsverfahren dicker sein kann, wodurch sich Symmetriefehler der Faser einfacher reduzieren lassen. Für flexible Fasern werden daher für den Kerndurchmesser Werte von höchstens 600 $\mu$m bevorzugt.

Es sind noch weitere Einschränkungen für den Kerndurchmesser zu beachten. Wenn der Kerndurchmesser $D_k$ zu klein ist, findet in der Faser eine starke Modenkopplung statt, weil die Intensität der Fasermoden an der Kern-Mantel-Grenzfläche hoch ist. Deshalb sind weitere Untergrenzen für $D_k$ einzuhalten. Wenn die maximale Modenordnung o zwischen 5 und 20 liegt, ist $D_k$ größer als $2,5 \cdot o \cdot \lambda/\sqrt{\Delta n_k}$, wobei $\sqrt{\Delta n_k}$ die Quadratwurzel aus der Brechzahldifferenz $\Delta n_k = n_{ki} - n_{ka}$ bezeichnet und $\lambda$ die Strahlungswellenlänge. Für o < 5 ist die Untergrenze nach vorstehender Formel zu niedrig, dann soll $D_k$ größer als $12,5 \cdot \lambda/\sqrt{\Delta n_k}$ sein. Für Strahlung mit hoher maximaler Modenordnung, etwa o > 20, besteht die Strahlung schon am Laserausgang aus vielen Moden mit hoher Ordnung. Deshalb sind die Anforderungen an eine Faser zur Übertragung dieser Strahlung bzgl. der Erhaltung der Strahlqualität geringer: Man kann eine geringe Kopplung der Fasermoden bei der Übertragung zulassen, die Strahlqualität wird dadurch nur unwesentlich vermindert. Für Fasern zur Übertragung von Strahlung mit $o \geq 20$ kann deshalb die Zunahme des Kerndurchmessers $D_k$ mit zunehmender Modenordnung geringer sein: Es reicht ein Kerndurchmesser von mindestens $2,5 \cdot (4,5 \cdot \sqrt{o}) \cdot \lambda / \sqrt{\Delta n_k}$ aus. Dabei wurde die Beobachtung ausgenutzt, daß bei Strahlung mit hoher Modenordnung die Strahlungsintensität radial sehr schnell abfällt, wenn man sich von der Strahlachse hinreichend weit entfernt ist, d.h. die Kontur des Strahls ist i.allg. scharf definiert. Diese Untergrenze für $D_k$ ist zwar sehr niedrig - sie reicht aber bei Fasern mit einer guten Einhaltung der Fasergeometrie, bei sorgfältiger Einkopplung der Strahlung in die Faser und nur schwachen Biegungen schon aus, um die Strahlung mit hoher Qualität zu übertragen.

In der Praxis kann es aber z.B. erforderlich sein, daß die Faser bei der Strahlungseinkopplung eine große Toleranz für Fehlanpassungen des Modenradius der Strahlungsmoden an den Modenradius der Fasermoden aufweist. In solchen Fällen wird, wenn die maximale Modenordnung $o$ zwischen 3 und 20 liegt, für den Kerndurchmesser $D_k$ die Untergrenze $5,0 \cdot o \cdot \lambda / \sqrt{\Delta n_k}$ bevorzugt. Wenn $o$ kleiner als 3 ist, wird für den Kerndurchmesser $D_k$ die Untergrenze $15 \cdot \lambda / \sqrt{\Delta n_k}$ bevorzugt. Für maximale Modenordnungen mit $o > 20$ reicht für den Kerndurchmesser als Untergrenze $5 \cdot (4,5 \cdot \sqrt{o}) \cdot \lambda / \sqrt{\Delta n k}$ aus. Eine derartige Faser kann Strahlung noch mit einer guten Strahlqualität übertragen, selbst wenn der Modenradius der Strahlungsmoden bei der Einkopplung um mehr als $\pm$ 50 % vom Modenradius der Fasermoden abweicht.

Sofern die Faserabmessungen es zulassen, läßt sich die Strahlungseinkopplung in die Faser weiter vereinfachen und vor allem die Biegeunempfindlichkeit der Faser verbessern, wenn man noch größere Werte für $D_k$ wählt. Für $3 < o < 20$, wobei $o$ die maximale Modenordnung bezeichnet, ist in der stärker bevorzugten Ausführungsform $D_k$ größer als $8 \cdot o \cdot \lambda / \sqrt{\Delta n_k}$. Wenn $o$ kleiner als 3 ist, wird für den Kerndurchmesser $D_k$ die Untergrenze $24 \cdot \lambda / \sqrt{\Delta n_k}$ bevorzugt. Dann läßt sich die Faser in der Regel auf Radien biegen, die kleiner sind als 50 mm, ohne daß ein starkes Überkoppeln von Strahlungsleistung zwischen Fasermoden stattfindet.

Man erwartet, daß es für Fasern zur Übertragung von Strahlung mit geordneter Modenstruktur günstig ist, für den Exponenten g möglichst genau den Wert 2 einzustellen. Für die erfindungsgemäße Faser wurde aber überraschend gefunden, daß g stark vom Wert 2 abweichen darf: g liegt nach der Erfindung im Bereich von 1,4 bis 3,0 - die übrigen Merkmale der Faser bewirken nämlich, daß sich die Abweichungen des Brechzahlprofils nicht nachteilig auswirken.

Diese Beobachtung, daß die Faser auch für starke Abweichungen des Exponenten g vom Wert 2 die Strahlung gut übertragen kann, ist u.E. dadurch erklärbar, daß sich das Profil nach Gl. (3) in der Nähe der Faserachse, wo der Großteil der Strahlung geführt wird, durch ein Parabelprofil gut approximieren läßt.

Für eine maximale Ordnung $o$ von bis zu 5 tritt zwischen den Moden meistens sogar überhaupt keine effektive Kopplung auf, d.h. die Modenstruktur wird perfekt übertragen, wenn der Exponent g im o.a. Bereich liegt.

Mit zunehmender Modenordnung wird die Strahlung in achsferneren Zonen des Kerns geführt. Dort kann die Approximation des Brechzahlprofils durch das Parabelprofil schlechter werden, infolgedessen kann doch eine schwache Kopplung zwischen den Moden auftreten. Obwohl die dadurch bewirkte geringfügige Verschlechterung der Strahlqualität für die Praxis meistens vernachlässigbar ist, kann es dann vorteilhaft sein, für den Exponenten g engere Grenzen zu wählen. Wenn die maximale Modenordnung $o$ kleiner als 10 ist, wird bevorzugt, daß der Exponent g im Bereich von 1,6 bis 2,4 liegt, und wenn $o$ größer als 10 ist, wird bevorzugt, daß g im Bereich von 1,8 bis 2,2 liegt. Dadurch wird insbesondere erreicht, daß die Kopplung von Strahlungsleistung in Moden mit noch höherer Ordnung sehr schwach wird.

Aus der o.g. Bandbreite für den Exponenten g des Brechzahlprofils der Faser entstehen fertigungstechnische Vereinfachungen: Man kann bei der Herstellung der Faser ungewöhnliche Techniken anwenden, und die Faser wird unempfindlich gegenüber kleinen Brechzahlfluktuationen. Das ist dann vorteilhaft, wenn, wie es bei der erfindungsgemäßen Faser der Fall sein kann, die Brechzahldifferenz im Kern nur klein ist.

Durch die Bandbreite für den Exponenten g tritt die Schwierigkeit auf, daß der exakte Radius der Fasermoden, dessen Kenntnis für eine perfekte Strahlungseinkopplung in die Faser notwendig ist, nicht einfach (theoretisch) vorbestimmbar ist. Das ist aber keine wesentliche Schwierigkeit, denn es sind Meßverfahren bekannt, um an fertigen Fasern den Radius der Fasermoden zu bestimmen. Ferner wurde beobachtet, daß die Abhängigkeit des Modenradius vom Exponenten g bzw. von fertigungsbedingten Fluktuationen des Brechzahlprofils kleiner werden kann, wenn man gerade den Wert 2 vermeidet; i.allg. reichen dazu schon sehr kleine Abweichungen aus.

Die Brechzahldifferenz im Kern der erfindungsgemäßen Faser, $\Delta n_k = n_{ki} - n_{ka}$, beträgt mehr als $1,6 \cdot 10^{-3}$. Bei kleineren Werten ist damit zu rechnen, daß Strahlungsverluste auftreten, weil die Strahlung nicht sicher im Kern eingeschlossen wird.

Sicherheitshalber ist $\Delta n_k$ in einer bevorzugten Ausführungsform größer als $3,3 \cdot 10^{-3}$, damit auch eventuell auftretende geringe Fluktuationen der Brechzahl unschädlich bleiben. Dieser größere Wert empfiehlt sich besonders dann, wenn ein größerer Kerndurchmesser $D_k$ gewählt wird. Z.B. können, wenn der Kerndurchmesser der Faser $D_k$ größer als 300 $\mu$m ist und die Brechzahldifferenz kleiner als $3,3 \cdot 10^{-3}$ ist, schon Mikrokrümmungsverluste auftreten, die die Übertragungseffizienz der Faser reduzieren.

Eine Obergrenze für die Brechzahldifferenz $\Delta n_k$ kann sich aus der Forderung ergeben, daß die optischen Elemente zur Ein- oder Auskopplung der Strahlung in oder aus der Faser einfach sein sollen (kleine Numerische Apertur NA). Um das zu erreichen, ist $\Delta n_k$ bevorzugt kleiner als $4 \cdot 10^{-4} \cdot (D_k/\lambda)^{-2}/o^2$ , wobei $\lambda$ die Strahlungswellenlänge, $D_k$ der Kerndurchmesser der Faser, und $o$ die maximale Modenordnung ist. Wird diese Obergrenze für die Brechzahldifferenz eingehalten, können optische Komponenten mit einer NA von weniger als 0,3 (voller Winkel) verwendet werden. Optiken mit dieser NA lassen sich noch ohne großen Aufwand herstellen. Stärker bevorzugt ist $\Delta n_k$ kleiner als $2 \cdot 10^{-5} \cdot (D_k/\lambda)^2/o^2$ , weil dann in der Regel herkömmliche optische Komponenten mit einer NA von weniger als 0,15 verwendet werden können.

Im Kern einer Faser zur Übertragung von Strahlung vom nah-ultravioletten bis nah-infraroten Spektralbereich, mit Wellenlängen von etwa 250 nm bis etwa 2 $\mu$m, ist die Brechzahldifferenz $\Delta n_k$ = $n_{ki} - n_{ka}$ vorteilhafterweise kleiner als $20 \cdot 10^{-3}$. Bei den Fasern dieser Erfindung skaliert der Radius w der Fasermoden mit der Brechzahldifferenz etwa wie w ~ $\Delta n^{-1/4}$. Für ein $\Delta n$ von mehr als $20 \cdot 10^{-3}$ ist deshalb die Wirkung von $\Delta n$ auf den Modenradius klein und man findet eigentlich keinen positiven Einfluß mehr auf die Strahlführung der Faser.

Kleinere Brechzahldifferenzen im Kern sind dagegen günstig, um die Faser mit einfacheren Zusammensetzungen bzw. Verfahren herstellen zu können und weil der Modenradius der Fasermoden und damit auch die Grenzleistung der übertragbaren Strahlung erhöht wird. Stärker bevorzugt beträgt $\Delta n$ weniger als $10 \cdot 10^{-3}$, diese Brechzahldifferenz ist auf einfache Weise mit dem PICVD-Verfahren erzielbar.

Im nah-infraroten Spektralbereich mit längerer Wellenlänge, etwa für Wellenlängen von bis zu 11 $\mu$m, könnten auch größere Werte für die Brechzahldifferenz $\Delta n_k$, von bis zu $200 \cdot 10^{-3}$, günstig sein. Aus praktischen Gründen (z.B. um die Numerische Apertur der optischen Elemente zur Ein- oder Auskopplung der Strahlung in bzw. aus der Faser klein zu halten) sollte aber auch in solchen Fällen die Brechzahldifferenz kleiner als $100 \cdot 10^{-3}$ sein.

Wir erklären die Beobachtung, daß für den Exponenten g eine große Bandbreite und für die Brechzahldifferenz $\Delta n_k$ kleine Werte zulässig sind, wie folgt: Das Überkoppeln von Strahlungsenergie zwischen Fasermoden wird durch "Kopplungslängen" und "Kohärenzlängen" für (konstruktives) Überkoppeln bestimmt. Damit effektives Überkoppeln stattfindet, muß die Kopplungslänge kürzer als die zugehörige Kohärenzlänge sein. Andernfalls kehrt sich innerhalb der Kopplungslänge die relative Phase der Fasermoden um und es setzt destruktives Überkoppeln ein, d.h. die in einen Mode eingekoppelte Strahlungsleistung wird dann wieder abgezogen und die mittlere Leistung in dem Mode bleibt gering. Es kommt also darauf an, die Kopplungslängen mit den Kohärenzlängen zu vergleichen.

Die Kopplungslängen der Fasermoden sind bei der erfindungsmäßigen Faser kurz, weil die Abweichung des Brechzahlprofils vom idealen $r^2$-Profil groß ist - in der Regel sind aber die zugehörigen Kohärenzlängen noch kürzer: Die Kohärenzlänge für die Wechselwirkung zwischen zwei Fasermoden ergibt sich aus den an sich bekannten Modenkonstanten der Fasermoden; diese haben für Fasermoden etwa die Bedeutung wie der Wellenvektor für freie elektromagnetische Wellen. Je verschiedener die Modenkonstanten sind, um so kürzer ist die Kohärenzlänge. Daraus folgt, daß die Kopplung von Strahlungsleistung zwischen den Moden wirksam unterdrückt wird, wenn ihre Modenkonstanten sehr unterschiedlich sind. Die erfindungsmäßige Faser hat diese Eigenschaft.

Bei den bekannten Potenzprofilfasern mit einer verminderten modalen Laufzeitstreuung wird die Situation gerade ungünstig, weil in diesen Faser (mit einer kleinen Laufzeitstreuung der Fasermoden) die Modenkonstanten der Fasermoden ähnlich sind.

Die Dispersion der Fasermoden wird besonders klein, d.h. die Kohärenzlängen besonders groß, wenn die Faser annähernd ein $r^2$-Profil hat. Es kann also zur Unterdrückung der Modenkopplung günstig sein, wenn g von 2 verschieden ist. Dazu ist der Exponent g des Brechzahlprofils der Faser bevorzugt kleiner als 1,95 oder größer als 2,05. In der Regel verkürzt sich dann mit zunehmender Abweichung des Exponenten g vom Wert 2 die Kohärenzlänge schneller als die Kopplungslänge.

Günstiger ist es aber, besonders wenn die Laserstrahlung überwiegend aus Moden mit niedriger Ordnung besteht, etwa mit einer maximalen Modenordnung $o$ von 10, wenn die Abweichungen des Exponenten g vom Wert 2 noch größer sind. Dann sind nämlich die Abweichungen des Brechzahlprofils vom $r^2$-Profil auch in Nähe der Faserachse wirksam, d.h. die Dispersion wird dann auch für Fasermoden mit niedriger Ordnung wirksam. In der stärker bevorzugten Ausführung ist deshalb der Exponent g kleiner als 1,9 oder größer als 2,1.

Die Hauptaufgabe des Mantels bei Multimodefasern ist, die Strahlungsführung durch die Faser sicherer zu machen. Von gut biegbaren Fasern beträgt der Außendurchmesser des Mantels nicht mehr als 1,2 mm, besser sind Fasern mit einem Außendurchmesser des Mantels von weniger als 1,0 mm, auf enge Radien biegbare Fasern haben einen Außendurchmesser des Mantels von weniger als 700 $\mu$m. Die Anforderungen an den Dämpfungskoeffizienten des Mantelmaterials sind geringer als an den des Kernmaterials, das Finden geeigneter Materialien ist i.allg. kein Problem.

In günstigen Fällen, z.B. wenn die maximale Modenordnung der zu übertragenden Strahlung niedrig ist und wenn die Faser nicht zu stark gebogen wird, ist der Einfluß des Mantels auf die Modenstruktur der geführten Strahlung gering, in der einfachsten Ausführung der Faser kann das Mantelmaterial deshalb annähernd homogen sein. Andernfalls ist es vorteilhafter, wenn auch im Mantel das Brechzahlprofil geeignet gestaltet wird. (Da bei der erfindungsgemäßen Faser die Brechzahldifferenz im Kern und der Kerndurchmesser klein sein können, hat man in der Regel einen ausreichenden Spielraum, um die Brechzahl auch im Mantel noch strukturieren zu können.)

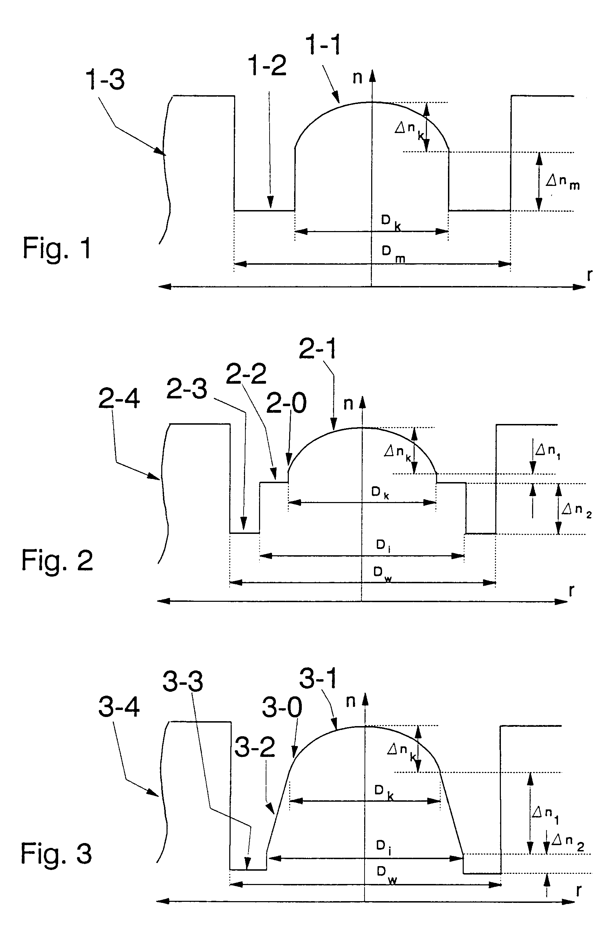

Die Fig. 1 bis 3 zeigen vorteilhaft ausgestaltete Fasern. Dort ist jeweils die Abhängigkeit der Brechzahl vom Abstand von der Faserachse r für den Kern und den inneren Teil des Mantels aufgetragen. Die Figuren sind zur besseren Darstellung nicht maßstabsgetreu.

Die Fasereigenschaften werden verbessert, wenn die Brechzahl im Mantel an der Kern-Mantel-Grenzfläche auf einen Wert $n_m$ unter $n_{ka}$ absinkt und den Wert $n_m$ in einer Schicht mit der Dicke $\delta_i$ nicht überschreitet. Durch diese Ausgestaltung des Mantels wird die Strahlführung durch die Faser sicherer, weil es bei einzelnen starken Biegungen der Faser, die z.B. bei Betriebsstörungen auftreten können, unwahrscheinlicher wird, daß die Strahlung aus dem Kern ausgekoppelt wird (was bei hohen Strahlungsleistungen sogar zur Zerstörung der Faser führen kann).

Die Dicke $\delta_i$ der innersten Schicht des Fasermantels beträgt bevorzugt wenigstens 10 $\mu$m, um zu verhindern, daß die Strahlung diese Schicht durchtunneln kann.

Jedoch können bei einer Faser mit einem nur 10 $\mu$m dicken Mantel u.U. Probleme auftreten, z.B. wenn die Faser an ihren Enden in den Hülsen gequetscht wird. Außerdem zeigt es sich in der Praxis, daß die Toleranzen bei der Einkopplung der Strahlung in die Faser größer werden, wenn die

Dicke $\delta_i$ zunimmt. Wenn es für die Dicke des Mantels noch einen handhabungs- oder fertigungstechnischen Spielraum gibt, wird daher bevorzugt, daß die Dicke der innersten Mantelschicht $\delta_i$ größer als 50 $\mu$m ist.

Fig. 1 zeigt eine Faser, bei welcher die Brechzahl in der direkt auf dem Kern liegenden Mantelschicht näherungsweise konstant ist. Es bezeichnen $1-1$ den Kern mit dem Durchmesser $D_k$ und der Brechzahldifferenz $\Delta n_k$, und $1-2$ die innerste Schicht des Mantels mit dem Außendurchmesser $D_m$, der Dicke $\delta_i = (D_m-D_k)/2$ und der positiven Brechzahldifferenz $\Delta n_m = n_{ka}-n_m$. Auf der Schicht $1-2$ können sich noch weitere, durch $1-3$ angedeutete Mantelschichten befinden.

Die Brechzahlabsenkung $\Delta n_m = n_{ka}-n_m$ ist vorteilhafterweise größer als $1 \cdot 10^{-3}$, da dann fertigungsbedingt auftretende kleine Brechzahlschwankungen unschädlich sind. Größere Werte für $\Delta n_m$ und $\delta_i$ sind günstig, ihnen können aber praktische Gründe entgegenstehen: Bei sehr großen Werten für $\Delta n_k$ können komplizierte Faserzusammensetzungen erforderlich sein. Bei sehr großen Werten für $\delta_i$ ist mit Handhabungsproblemen zu rechnen, weil die Fasern dann nicht mehr ausreichend flexibel ist.

In der Regel erreicht man noch bessere Fasereigenschaften, wenn die Brechzahl in der innersten Schicht des Mantels mit der Dicke $\delta_i$ einen im wesentlichen konstanten Wert $n_{mi}$ hat, der etwa $n_{ka}$ beträgt oder etwas kleiner ist, und in einer auf der innersten Schicht direkt aufliegenden weiteren Schicht mit der Dicke $\delta_w$ einen Wert $n_{mw}$ hat, der unter $n_{mi}$ liegt. Bei dieser Faser kommt es zwar vor, daß bei starken Biegungen ein Teil der Strahlung aus dem Kern ausgekoppelt wird - die Verluststrahlung wird aber noch in der innersten Schicht des Mantels geführt und erst auf langen Faserabschnitten oder am Faserende ausgekoppelt. Erreicht die Verluststrahlung, deren Strahlqualität deutlich schlechter ist als die der "ordentlich geführten Strahlung", das Faserende, dann läßt sie sich von der ordentlich geführten Strahlung trennen, wenn die innerste Schicht des Mantels ausreichend dick ist.

Im einfachsten Fall sind $n_{mi}$ und $n_{ka}$ gleich. Um die Wahrscheinlichkeit zu reduzieren, daß die Verluststrahlung mit einer schlechten Strahlqualität in den Kern zurückgekoppelt wird, wird die Brechzahl in einer bevorzugten Ausführungsform analog zur Faser in Fig. 1 vom Kern zum Mantel hin abgesenkt. Die Brechzahl $n_{mi}$ im Mantel an der Kern-Mantel-Grenzfläche ist dann aus den gleichen Gründen wie oben beschrieben um wenigstens $1 \cdot 10^{-3}$ niedriger als die Brechzahl $n_{ka}$ im Kern unmittelbar an dieser Grenzfläche.

Fig. 2 zeigt eine solche Faser. Es bezeichnen $2-0$ die Kern-Mantel-Grenzfläche, $2-1$ den Kern

mit dem Durchmesser $D_k$ und der Brechzahldifferenz $\Delta n_k$, *2−2* die innerste Schicht des Mantels mit der Brechzahl $n_{mi}$, dem Außendurchmesser $D_i$ und der Dicke $\delta_i = (D_i-D_k)/2$, *2−3* die weitere Schicht des Mantels mit der Brechzahl $n_{mw}$, dem Außendurchmesser $D_w$ und der Dicke $\delta_w = (D_w-D_i)/2$. Durch die Absenkung der Brechzahl beim Durchgang durch die Grenzfläche *2−0* entsteht die Brechzahldifferenz $\Delta n_1 = n_{ka}-n_{mi}$ und durch Absenkung der Brechzahl zwischen den Schichten *2−2* und *2−3* vom Wert $n_{mi}$ auf den Wert $n_{mw}$ die Brechzahldifferenz im Mantel $\Delta n_2 = n_{mi}-n_{mw}$. Auf Schicht *2−3* können sich weitere Mantelschichten befinden, durch *2−4* angedeutet, diese leisten jedoch keinen entscheidenden Beitrag mehr zur Strahlführung der Faser.

Die Brechzahl in Schicht *2−2* ist kleiner als $n_{ka}$, weil sonst die qualitativ schlechte Verluststrahlung aus Schicht *2−2* in den Kern *2−1* zurückgekoppelt werden könnte. Die Schicht *2−2* wirkt für die Verluststrahlung wie eine Stufenindexfaser; damit die Strahlführungseigenschaften dieser Stufenindexfaser ausreichen, beträgt die Brechzahlabsenkung $\Delta n_2 = n_{mi}-n_{mw}$ mindestens $1,5 \cdot 10^{-3}$. Die Dicke $\delta_i$ beträgt mindestens 10 $\mu m$, damit die Strahlung die innerste Mantelschicht nicht durchtunneln kann. Diese Dicke hat noch den weiteren Vorteil, daß sich die in Schicht *2−2* geführte Strahlung am Auskoppelende von der ordentlich geführten Strahlung gut trennen läßt. Bevorzugt ist $\delta_i$ größer als 50 $\mu m$, um die Einkopplung der Strahlung zu vereinfachen: Die bei der Einkopplung auftretende Verluststrahlung kann dann durch die von den Schichten *2−2* und *2−3* gebildete Stufenindexfaser ausreichend gut geführt werden, so daß bei der Einkopplung keine Schäden auftreten (die Verluststrahlung wird entweder bis zum Auskoppelende der Faser geführt oder auf langen und gut kühlbaren Faserabschnitten aus der Faser ausgekoppelt). Größere Werte für $\Delta n_2$ und und $\delta_i$ sind günstig, können aber zu fertigungs- oder handhabungstechnischen Problemen führen. Die Dicke $\delta_w$ der Schicht *2−3* ist vorzugsweise größer als 7 $\mu m$, um die Wahrscheinlichkeit herabzusetzen, daß die in *2−2* geführte Strahlung diese Schicht durchtunneln kann.

Die Brechzahldifferenz $\Delta n_1$ könnte im Prinzip sehr groß sein, es ist aber kaum notwendig, daß sie mehr als $8 \cdot 10^{-3}$ beträgt, weil der beschriebene positive Effekt schon für kleine Brechzahldifferenzen feststellbar ist andererseits aber größere Brechzahldifferenzen den Fertigungsspielraum erheblich einschränken würden.

Noch bessere Eigenschaften der Faser erhält man, wenn in der innersten Schicht des Mantels um den Kern die Brechzahl von einem Wert $n_{mi}$, der im wesentlichen dem Wert $n_{ka}$ entspricht, kontinuierlich von innen nach außen auf einen niedrigeren Wert $n_{ma}$ absinkt. Dadurch wird es bei vereinzelt auftretenden starken Biegungen der Faser unwahrscheinlicher, daß Strahlung unkontrolliert aus dem Kern ausgekoppelt wird. Weiter wird die Qualität der Strahlung, welche die Kern-Mantel-Grenzfläche erreicht, nur geringfügig verschlechtert.

Fig. 3 zeigt eine entsprechend ausgestaltete Faser. Es bezeichnen *3−0* die Kern-Mantel-Grenzfläche, *3−1* den Kern mit dem Durchmesser $D_k$ und der Brechzahldifferenz $\Delta n_k$, *3−2* die innerste Schicht des Mantels mit dem Außendurchmesser $D_i$, der Dicke $\delta_i = (D_i-D_k)/2$ und den Werten $n_{mi}$ und $n_{ma}$ für die Brechzahl an der Innen- bzw. Außenfläche. *3−3* und *3−4* sind weitere Schichten des Mantels. Die Brechzahl in der innersten Schicht *3−2* fällt in diesem Beispiel linear vom Wert $n_{mi} = n_{ka}$ auf den Wert $n_{ma}$ ab; die Brechzahldifferenz in Schicht *3−2* beträgt $\Delta n_1 = n_{ka}-n_{ma}$.

Eine Dicke $\delta_i = (D_i-D_k)/2$ der innersten Mantelschicht *3−2* von wenigstens 10 $\mu m$ wird bevorzugt, weil die Strahlung diese Schicht sonst durchtunneln kann. Die Brechzahlabsenkung $\Delta n_1 = n_{ka}-n_{ma}$ ist vorzugsweise größer als $2 \cdot 10^{-3}$, da fertigungsbedingte Brechzahlschwankungen das Brechzahlprofil sonst unkontrollierbar beeinflussen können.

Wenn es für die Dicke des Mantels noch einen Spielraum gibt, wird es stärker bevorzugt, daß die Dicke $\delta_i = (D_i-D_k)/2$ der innersten Schicht *3−2* wenigstens 50 $\mu m$ beträgt, damit die bei der Einkopplung auftretende Verluststrahlung in der Schicht *3−2* ausreichend gut geführt werden kann.

Analog zur Ausführungsform in Fig. 2 kann man diesen Effekt dadurch verstärken, daß auf der innersten Schicht des Mantels noch eine weitere Schicht *3−3* mit dem Außendurchmesser $D_w$ direkt aufliegt, deren Dicke $\delta_w = (D_w-D_k)/2$ größer als 7 $\mu m$ ist und deren Brechzahl $n_{mw}$ unter $n_{ma}$ liegt und im wesentlichen konstant ist. Vorzugsweise ist die Brechzahlabsenkung $\Delta n_2 = n_{ma}-n_{mw}$ größer als $1,5 \cdot 10^{-3}$.

Eine Absenkung der Brechzahl vom Kern *3−1* zur innersten Schicht des Mantels *3−2* hin - die Brechzahl $n_{mi}$ im Mantel an der Kern-Mantel-Grenzfläche *3−0* ist dann kleiner als die Brechzahl $n_{ka}$ im Kern unmittelbar an dieser Grenzfläche - hat keinen positiven Einfluß auf die Strahlführungseigenschaften der Faser und soll vermieden werden. Stattdessen stellt man fest, daß sich die Strahlführungseigenschaften der Faser verbessern, wenn der Verlauf der Brechzahl beim Durchgang durch die Grenzfläche möglichst glatt erfolgt (glatt = stetig differenzierbar, "keine Knicke" im Brechzahlprofil).

Die Diffusion von Kern- bzw. Mantelmaterialien durch die Kern-Mantel-Grenzflächebzw. durch die Grenzflächen zwischen den verschiedenen Schichten des Mantels kann den Brechzahlverlauf im Kern oder in diesen Schichten beeinflussen, die "Brechzahlstufen" in den Fig. 1 bis 3 können z.B. gerundet sein. Diese Diffusion hat aber in der Regel keinen meßbaren Effekt auf die Strahlführungseigenschaften der Faser; zur Festlegung der nominellen Faserdaten kann es jedoch sinnvoll sein, für das Brechzahlprofil nur die Werte außerhalb der Diffusionszone vorzugeben. Meistens reicht dazu ein Abstand von wenigen $\mu$m von den Grenzflächen aus.

Der Mantel der Faser kann von einer ein- oder mehrschichtigen Schutzhülle (Coating) bedeckt sein. Die Coatingmaterialien sind für die Strahlführungseigenschaften der Faser im wesentlichen unbedeutend und können so gewählt werden, daß sich günstige Herstellungs- oder Handhabungsbedingungen oder z.B. mechanische Eigenschaften der Faser ergeben. Die Coatingschichten bestehen vorzugsweise aus Glas oder Kunststoff.

Bei den üblichen Herstellungsmethoden für optische Fasern werden in einer engen Umgebung der Faserachse ein Absinken der Brechzahl (Brechzahl-Dip) z.B. durch Verdampfen von Faserbestandteilen beobachtet. Solche Abweichungen führen zu einer stärkeren Verzerrungen der Modenstruktur. Für die Herstellung der Faser werden Zusammensetzungen und Verfahren bevorzugt, für die ein Brechzahl-Dip nicht auftritt.

Für Fasern zur Übertragung von Strahlung im Spektralbereich mit Wellenlängen von 250 nm bis 2 $\mu$m wird bevorzugt, daß der Kern fast ausschließlich aus $SiO_2$-Glas und Fluor-dotiertem $SiO_2$-Glas (F:$SiO_2$) besteht, und daß das Brechzahlprofil im Kern durch eine radial zunehmende Fluor-Dotierung eingestellt wird. Durch diese Art der Dotierung lassen sich z.B. mit Innenbeschichtungsverfahren im $SiO_2$-Glas Brechzahlabsenkungen von maximal bis zu $- 30 \cdot 10^{-3}$ erreichen, dann arbeiten diese Verfahren aber wenig reproduzierbar. Deshalb sollte man sich auf Brechzahldifferenzen von weniger als $- 20 \cdot 10^{-3}$ einschränken. Es empfiehlt sich sogar ein Wert von weniger $- 11 \cdot 10^{-3}$, um die Faser mit einem geringen Aufwand herstellen zu können. Die Fluor-Dotierung hat den Vorteil, daß beim Kollabieren der Faservorformen kein merkliches Abdampfen des Fluors stattfindet, und daß deshalb kein Brechzahl-Dip auftritt. Ein weiterer Vorteil von Fasern, deren Kern nur aus $SiO_2$ und F:$Si_2$ besteht, ist, daß die Schadensgrenzwerte und die Schwellwerte für schädliche nichtlineare optische Effekte, wie z.B. der stimulierten Ramanstreuung, groß sind.

Es wird weiter bevorzugt, daß die Dotierung der Faser im Fasermittelpunkt am geringsten ist, d.h. daß dort die Faser aus möglichst reinem $SiO_2$-Glas besteht. Dann lassen sich noch höhere Schadensgrenzwerte erreichen, außerdem kann so eine große Brechzahldifferenz im Kern eingestellt werden. Sollte die Fluor-Dotierung nicht ausreichen, um den gewünschten Brechzahlverlauf in der Faser zu erreichen, wird bevorzugt, daß die Faser im Kern nur aus reinem und Fluor-dotiertem $SiO_2$ besteht, und daß die Faser im Mantel zusätzlich mit $B_2O_3$ dotiert wird, um dort die Brechzahl weiter zu senken.

Bei manchen Herstellungsverfahren läßt sich ein kontinuierlicher Verlauf der Brechzahl im Kern nicht einstellen. Bei den MCVD-Verfahren z.B. besteht das Brechzahlprofil im Kern aus einer radialen Folge aus mindestens 20 Schichten, deren Brechzahl vorgegeben werden kann. So läßt sich eine Faser mit einem diskreten Brechzahlprofil im Kern realisieren, das weitgehend an den durch Gl. (3) beschriebenen Verlauf angepaßt ist. Die derart hergestellten Fasern können im Sinne dieser Erfindung bemaßt und verwendet werden.

Das durch Gl. (3) beschriebene Brechzahlprofil soll "weitgehend" eingehalten werden. Fertigungsbedingt können aber geringe Fluktuationen der Brechzahl bzw. des Brechzahlverlaufs auftreten. Dennoch sind in der Regel diese Fasern im Sinne dieser Erfindung verwendbar.

Man kann sicher sein (grobe Abschätzung), daß die Faser im Sinne der Erfindung verwendbar ist, wenn eine der folgenden Bedingungen gilt:

- Die Schwankungen der lokalen Brechzahlwerte um den durch das ideale Brechzahlprofil nach Gl. (3) vorgegebenen Wert sind kleiner $0,06 \cdot \Delta n_k$. Dabei ist $\Delta n_k$ die Brechzahldifferenz im Kern der Faser nach Gl. (3).
- Die Schwankungen der lokalen Brechzahlwerte um den durch das ideale Brechzahlprofil nach Gl. (3) vorgegebenen Wert sind kleiner als $0,11 \cdot \Delta n_k \cdot (2r/D_k)$. Die zulässigen Abweichungen können also linear mit dem Abstand von der Faserachse zunehmen. Dabei ist r der Abstand von der Faserachse, $D_k$ der Kerndurchmesser und $\Delta n_k$ die Brechzahldifferenz im Kern der Faser nach Gl. (3).
- Wenn sich das Brechzahlprofil im Kern durch eine radiale Schichtenfolge ergibt, sei für die Brechzahl der innersten und zweit-innersten Schicht, $n_{k1}$ und $n_{k2}$, ,

$$n_{k1}\text{-}n_{k2} \leqq 0,08 \cdot \Delta n_k \cdot D_{ka \cdot 2}/D_k \text{ wenn } n_{k1} \text{ größer als } n_{k2} \text{ ist und.}$$

$$n_{k2}\text{-}n_{k1} \leqq 0,05 \cdot \Delta n_k \cdot D_{ka \cdot 2}/D_k \text{ wenn } n_{k1} \text{ kleiner als } n_{k2} \text{ ist.}$$

Dabei ist $D_{ka \cdot 2}$ der Außendurchmesser der zweit-innersten Schicht des Kerns. Fasern mit diesen Charakteristika werden ebenfalls als in die Erfindung einbezogen betrachtet.

Nachfolgend wird die Erfindung anhand eines Ausführungsbeispiels näher erläutert.

Beispiel

Es soll die Ausgangsstrahlung eines Nd:YAG-Lasers mit der Strahlungswellenlänge λ von $1,064 \cdot 10^{-6}$ m mit einer mittleren Leistung ⟨P⟩ von 40 W übertragen werden. Der Laser wird mit einem akusto-optischen Modulator gütegeschaltet und sendet mit der Frequenz von etwa 4 kHz eine Folge von Laserimpulsen mit einer mittleren Impulsdauer von etwa 120 ns aus. Die Spitzenleistung P eines Impulses beträgt bis zu 150 kW. Die Laserstrahlung ist radialsymmetrisch, die Strahlungmoden entsprechen weitgehend Gauß-Laguerre-Moden. Am Ausgang des Lasers wird eine maximale Modenordnung $o$ von 10 festgestellt: Die meisten Laserimpulse haben eine radiale Modenordnung $p$ von 2 (die Achse ausgenommen werden in radialer Richtung zwei Intensitätsminima, d.h. "Knoten", gezählt) und ein azimutale Modenordnung von 3 (auf dem vollen Umfang werden 6 Intensitätsminima gezählt, auf dem halben Umfang 3); dann gilt also $m = 2p + \ell + 1 = 8$.

Es wird eine Faser gemäß dieser Erfindung mit einem Exponenten g von 2,1, einer Brechzahldifferenz $\Delta n_k$ von $6 \cdot 10^{-3}$ und einem Kerndurchmesser $D_k$ von 400 μm gewählt.

Es wird die am stärksten bevorzugte Ausführung nach Fig. 3 gewählt. An der Kern-Mantel-Grenzfläche ist der Verlauf der Brechzahl stetig, d.h. dort liegt kein Brechzahlsprung vor. In der innersten Schicht des Mantels *3-2* fällt die Brechzahl näherungsweise linear ab, d.h. der radiale Brechzahlgradient dn/dr = -63 m$^{-1}$ ist dort annähernd konstant. Die Dicke der innersten Schicht beträgt 75 μm, d.h. in der innersten Schicht fällt die Brechzahl um $-4,7 \cdot 10^{-3}$. Aus dieser innersten Schicht des Mantels liegt eine weitere Schicht *3-3* mit der Dicke von 25 μm auf; in dieser weiteren Schicht ist die Brechzahl bzgl. des Wertes an der Außenfläche der innersten Schicht um weitere $-2 \cdot 10^{-3}$ abgesenkt.

Der Durchmesser $D_w$ in beträgt also 600 μm, und innerhalb dieser "optisch wirksamen Zonen" der Faser (der Kern und die beiden innersten Schichten des Mantels) beträgt die Brechzahldifferenz nur $12,7 \cdot 10^{-3}$. Die Faser wird mit dem PICVD-Verfahren, einem Innenbeschichtungs-CVD-Verfahren, aus den für den Spektralbereich um 1 μm am stärksten bevorzugten Faserbestandteilen, $SiO_2$ und $F:SiO_2$, hergestellt. In der Achse besteht die Faser aus reinem $SiO_2$, in radialer Richtung, von innen nach außen, nimmt die Dotierung des Kerns zu. Auf diese Weise läßt sich bequem eine Brechzahldifferenz von mehr als $13 \cdot 10^{-3}$ in Fasern einbringen.

Um die stark dotierte zweite Schicht des Mantels befindet sich noch eine weitere Mantelschicht aus $SiO_2$-Glas mit der Dicke von 120 μm; der Außendurchmesser des Glaskörpers der Faser beträgt also 840 μm. Fasern mit solchen Abmessungen sind zur Übertragung hoher Strahlungsleistungen gebräuchlich.

Der Modenradius der Fasermoden im Kern dieser Faser wurde, abhängig von der Modenordnung der Strahlungsmoden, zu 70...80 μm bestimmt. Ausgehend von einer Spitzen-Straldungsleistung von 150 kW kann man damit für den Kern eine Spitzenstrahlungsleistungsdichte etwa 800 MW/cm$^2$ abschätzen. Es ist bekannt, daß die hier verwendeten Fasermaterialien dieser Strahlungsleistungsdichte widerstehen können, ohne beschädigt zu werden. Bei den beschriebenen Fasern wurde auch keine Beschädigung beobachtet.

Bei dieser Faser wird beobachtet, daß für die maximale Modenordnung der Strahlung am Ende der Faser immer noch $o$ = 10 gilt, es wird aber festgestellt, daß die Strahlung auf mehr Moden mit $m = 2 \cdot p + \ell + 1 \leq 10$ verteilt ist.

**Patentansprüche**

1.  Flexible optische Gradientenprofilfaser zur Übertragung von Laserstrahlung mit hoher Leistung, mit einem Kern mit dem Durchmesser $D_k$, einem Mantel um den Kern und einer Schutzhülle um den Mantel, wobei der Kerndurchmesser $D_k$ zwischen $200 \cdot 10^{-6}$ m und $800 \cdot 10^{-6}$ m liegt, dadurch gekennzeichnet, daß zur weitgehenden Erhaltung der Modenstruktur,

    a) das Brechzahlprofil im Kern im wesentlichen dem Potenzgesetz

    $$n_k^2(r) = n_{ki}^2 - (n_{ki}^2 - n_{ka}^2) \cdot (2 \cdot r/D_k)^g$$

    folgt, wobei r der Abstand von der Faserachse, $n_{ki}$ die Brechzahl in der Faserachse und $n_{ka}$ die Brechzahl im Kern an der Grenzfläche zum Mantel ist, mit $n_{ki} > n_{ka}$,
    b) $D_k$ aber mindestens das 2,5-fache von $(o' \cdot \lambda)/\sqrt{\Delta n_k}$ beträgt,
    wobei $o'$ den Wert 5 hat, wenn die maximale Modenordnung der Laserstrahlung $o$ kleiner als 5 ist, $o' = o$ ist, wenn $o$ im Bereich von 5 bis 20 liegt, oder $o' = 4,5 \cdot \sqrt{o}$ ist, wenn $o$ größer als 20 ist, $\sqrt{\Delta n_k}$ die Wurzel der Brechzahldifferenz $\Delta n_k$ im Kern ist und λ die Wellenlänge der zu übertragenden Laserstrahlung,
    c) der Exponent g zwischen 1,4 und 3,0 liegt
    d) und daß die Brechzahldifferenz im Kern, $\Delta n_k = n_{ki} - n_{ka}$, größer als $1,6 \cdot 10^{-3}$ ist.

2.  Optische Faser nach Anspruch 1, dadurch gekennzeichnet,

daß der Kerndurchmesser $D_k$ im Bereich von $300 \cdot 10^{-6}$ m bis $600 \cdot 10^{-6}$ m liegt.

3. Optische Faser nach Anspruch 1 oder 2,
dadurch gekennzeichnet,
daß $\Delta n_k$ größer als $3{,}3 \cdot 10^{-3}$ ist.

4. Optische Faser nach wenigstens einem der Ansprüche 1 bis 3,
dadurch gekennzeichnet,
daß $D_k$ mindestens das 5-fache von $(o' \cdot \lambda)/\sqrt{\Delta n_k}$ beträgt, wobei $o'$ den Wert 3 hat, wenn $o$ kleiner als 3 ist, $o' = o$ ist, wenn $o$ im Bereich von 3 bis 20 liegt, oder $o' = 4{,}5 \cdot \sqrt{o}$ ist, wenn $o$ größer als 20 ist.

5. Optische Faser nach wenigstens einem der Ansprüche 1 bis 4,
dadurch gekennzeichnet,
daß $D_k$ mindestens das 8-fache von $(o' \cdot \lambda)/\sqrt{\Delta n_k}$ beträgt, wobei $o'$ den Wert 3 hat, wenn $o$ kleiner als 3 ist, $o' = o$ ist, wenn $o$ im Bereich von 3 bis 20 liegt.

6. Optische Faser nach wenigstens einem der Ansprüche 1 bis 6,
dadurch gekennzeichnet,
daß der Exponent g zwischen 1,6 und 2,4 liegt, wenn die maximale Modenordnung $o \leq 10$ ist, und zwischen 1,8 und 2,2 liegt, wenn $o > 10$ ist.

7. Optische Faser nach wenigstens einem der Ansprüche 1 bis 6,
dadurch gekennzeichnet,
daß $\Delta n_k$ kleiner als $4 \cdot 10^{-4} \cdot (D_k/\lambda)^2/o^2$ ist, wobei $D_k$ der Kerndurchmesser der Faser, $\lambda$ die Strahlungswellenlänge, und $o$ die maximale Modenordnung der Strahlung (mit $o > 1$) ist.

8. Optische Faser nach ewnigstens einem der Ansprüche 1 bis 7
dadurch gekennzeichnet,
daß $\Delta n_k$ kleiner als $2 \cdot 10^{-5} \cdot (D_k/\lambda)^2/o^2$ ist.

9. Optische Faser nach wenigstens einem der Ansprüche 1 bis 8 zur Übertragung von Strahlung mit einer Strahlungswellenlänge $\lambda$ im Bereich von $250 \cdot 10^{-9}$ m bis $2 \cdot 10^{-6}$ m,
dadurch gekennzeichnet,
daß die Brechzahldifferenz $\Delta n_k$ kleiner als $20 \cdot 10^{-3}$ ist.

10. Optische Faser nach wenigstens einem der Ansprüche 1 bis 9 zur Übertragung von Strahlung mit einer Strahlungswellenlänge $\lambda$ im Bereich von $250 \cdot 10^{-9}$ m bis $2 \cdot 10^{-6}$ m,
dadurch gekennzeichnet,

daß die Brechzahldifferenz $\Delta n_k$ kleiner als $10 \cdot 10^{-3}$ ist.

11. Optische Faser nach wenigstens einem der Ansprüche 1 bis 10,
dadurch gekennzeichnet,
daß der Exponent g kleiner als 1,95 oder größer als 2,05 ist.

12. Optische Faser nach wenigstens einem der Ansprüche 1 bis 11,
dadurch gekennzeichnet,
daß der Exponent g kleiner als 1,90 oder großer als 2,10 ist.

13. Optische Faser nach wenigstens einem der Ansprüche 1 bis 12,
dadurch gekennzeichnet,
daß direkt auf dem Kern eine Mantelschicht mit einer Dicke von wenigstens $10 \cdot 10^{-6}$ m liegt, in der die Brechzahl höchstens so groß ist wie das Minimum der Brechzahl im Kern.

14. Optische Faser nach Anspruch 13,
dadurch gekennzeichnet,
daß die Dicke der direkt auf dem Kern liegenden Mantelschicht wenigstens $50 \cdot 10^{-6}$ m beträgt.

15. Optische Faser nach Anspruch 13 oder 14,
dadurch gekennzeichnet,
daß das Brechzahlprofil an der Kern-Mantel-Grenzfläche einen glatten Verlauf hat oder daß, wenn die Brechzahl in der direkt auf dem Kern liegenden Mantelschicht näherungsweise konstant ist, die Brechzahl in dieser Schicht um mindestens $1 \cdot 10^{-3}$ niedriger ist als das Minimum der Brechzahl im Kern.

16. Optische Faser nach Anspruch 15,
dadurch gekennzeichnet,
daß, wenn das Brechzahlprofil an der Kern-Mantel-Grenzfläche einen glatten Verlauf hat, die Brechzahl in der direkt auf den Kern liegenden Mantelschicht radial von innen nach außen abfällt mit einer Brechzahldifferenz von mindestens $2 \cdot 10^{-3}$.

17. Optische Faser nach wenigstens einem der Ansprüche 13 bis 16,
dadurch gekennzeichnet,
daß auf der direkt auf dem Kern liegenden ersten Mantelschicht eine zweite Mantelschicht liegt, deren Dicke mindestens $7 \cdot 10^{-6}$ m beträgt, und daß die Brechzahl zwischen der ersten und zweiten Mantelschicht um mindestens $1{,}5 \cdot 10^{-3}$ abfällt.

**18.** Optische Faser nach wenigstens einem der Ansprüche 1 bis 17 zur Übertragung von Strahlung mit einer Strahlungswellenlänge λ im Bereich von $250 \cdot 10^{-9}$ m bis $2 \cdot 10^{-6}$ m,
dadurch gekennzeichnet,
daß der Kern bis auf unwesentliche Verunreinigungen aus reinem und Fluordotiertem $SiO_2$-Glas besteht und daß im Kern die Fluor-Dotierung von innen nach außen zunimmt.

**19.** Optische Faser nach Anspruch 18,
dadurch gekennzeichnet,
daß die innersten Schichten des Mantels bis auf unwesentliche Verunreinigungen aus reinem, Fluor- und $B_2O_3$-dotiertem $SiO_2$-Glas bestehen.

**Claims**

**1.** Flexible optical gradient-profile fibre for the transmission of laser radiation at high power, comprising a core having the diameter $D_k$, a cladding around the core and a protective sheath around the cladding, the core diameter being between $200 \cdot 10^{-6}$ and $800 \cdot 10^{-6}$ m, characterized in that, in order substantially to maintain the mode structure,

a) the refractive index profile in the core essentially follows the power law

$$n_k^2(r) = n_{ki}^2 - (n_{ki}^2 - n_{ka}^2) \cdot (2 \cdot r/D_k)^g$$

where r is the distance from the fibre axis, $n_{ki}$ is the refractive index in the fibre axis and $n_{ka}$ is the refractive index in the core at the interface with the cladding, $n_{ki}$ being $> n_{ka}$,
b) $D_k$ is, however, at least 2.5 times $(o' \cdot \lambda)/\sqrt{\Delta n_k}$, where $o'$ has the value 5 if the maximum mode order of the laser radiation $o$ is less than 5, $o' = o$ if $o$ is in the range from 5 to 20, or $o' = 4.5 \cdot \sqrt{o}$ if $o$ is greater than 20, $\sqrt{\Delta n_k}$ is the root of the refractive index difference $\Delta n_k$ in the core and λ is the wavelength of the laser radiation to be transmitted,
c) the exponent g is between 1.4 and 3.0,
d) and in that the refractive index difference in the core, $\Delta n_k = n_{ki} - n_{ka}$, is greater than $1.6 \cdot 10^{-3}$.

**2.** Optical fibre according to Claim 1, characterized in that the core diameter $D_k$ is in the range from $300 \cdot 10^{-6}$ m to $600 \cdot 10^{-6}$ m.

**3.** Optical fibre according to Claim 1 or 2, characterized in that $\Delta n_k$ is greater than $3.3 \cdot 10^{-3}$.

**4.** Optical fibre according to at least one of Claims 1 to 3, characterized in that $D_k$ is at least 5 times $(o' \cdot \lambda)/\sqrt{\Delta n_k}$, where $o'$ has the value 3 if $o$ is less than 3, $o' = o$ if $o$ is in the range from 3 to 20, or $o' = 4.5 \cdot \sqrt{o}$ if $o$ is greater than 20.

**5.** Optical fibre according to at least one of Claims 1 to 4, characterized in that $D_k$ is at least 8 times $(o' \cdot \lambda)/\sqrt{\Delta n_k}$, where $o'$ has the value 3 if $o$ is less than 3, $o' = o$ if $o$ is in the range from 3 to 20.

**6.** Optical fibre according to at least one of Claims 1 to 6, characterized in that the exponent g is between 1.6 and 2.4 if the maximum mode order $o$ is $\leq 10$, and between 1.8 and 2.2 if $o$ is $> 10$.

**7.** Optical fibre according to at least one of Claims 1 to 6, characterized in that $\Delta n_k$ is less than $4 \cdot 10^{-4} \cdot (D_k/\lambda)^2/o^2$, where $D_k$ is the core diameter of the fibre, λ is the radiation wavelength and $o$ is the maximum mode order of the radiation ($o$ being $> 1$).

**8.** Optical fibre according to at least one of Claims 1 to 7, characterized in that $\Delta n_k$ is less than $2 \cdot 10^{-5} \cdot (D_k/\lambda)^2/o^2$.

**9.** Optical fibre according to at least one of Claims 1 to 8 for the transmission of radiation having a radiation wavelength λ in the range from $250 \cdot 10^{-9}$ m to $2 \cdot 10^{-6}$ m, characterized in that the refractive index difference $\Delta n_k$ is less than $20 \cdot 10^{-3}$.

**10.** Optical fibre according to at least one of Claims 1 to 9 for the transmission of radiation having a radiation wavelength λ in the range from $250 \cdot 10^{-9}$ m to $2 \cdot 10^{-6}$ m, characterized in that the refractive index difference $\Delta n_k$ is less than $10 \cdot 10^{-3}$.

**11.** Optical fibre according to at least one of Claims 1 to 10, characterized in that the exponent g is less than 1.95 or greater than 2.05.

**12.** Optical fibre according to at least one of Claims 1 to 11, characterized in that the exponent g is less than 1.90 or greater than 2.10.

**13.** Optical fibre according to at least one of Claims 1 to 12, characterized in that a cladding layer which has a thickness of at least $10 \cdot 10^{-6}$ m and in which the refractive index is at most as large as the minimum of the refractive index in the core is situated directly on the core.

**14.** Optical fibre according to Claim 13, characterized in that the thickness of the cladding layer situated directly on the core is at least $50 \cdot 10^{-6}$ m.

**15.** Optical fibre according to Claim 13 or 14, characterized in that the refractive index profile has a smooth variation at the core/cladding interface or in that, if the refractive index in the cladding layer situated directly on the core is approximately constant, the refractive index in said layer is at least $1 \cdot 10^{-3}$ lower than the minimum of the refractive index in the core.

**16.** Optical fibre according to Claim 15, characterized in that, if the refractive index profile at the core/cladding interface has a smooth variation, the refractive index in the cladding layer situated directly on the core decreases radially from the inside outwards with a refractive index difference of at least $2 \cdot 10^{-3}$.

**17.** Optical fibre according to at least one of Claims 13 to 16, characterized in that a second cladding layer whose thickness is at least $7 \cdot 10^{-6}$ is situated on the first cladding layer situated directly on the core and in that the refractive index decreases by at least $1.5 \cdot 10^{-3}$ between the first and second cladding layer.

**18.** Optical fibre according to at least one of Claims 1 to 17 for the transmission of radiation having a radiation wavelength $\lambda$ in the range from $250 \cdot 10^{-9}$ m to $2 \cdot 10^{-6}$ m, characterized in that, apart from insignificant impurities, the core is composed of pure and fluorine-doped $SiO_2$ glass, and in that, in the core, the fluorine doping increases from the inside outwards.

**19.** Optical fibre according to Claim 18, characterized in that, apart from insignificant impurities, the innermost layers of the cladding are composed of pure, fluorine-doped and $B_2O_3$-doped $SiO_2$ glass.

## Revendications

**1.** Fibre optique souple à gradient d'indice pour la transmission de rayonnement laser de forte puissance, comportant un coeur de diamètre $D_k$, une gaine disposées autour du coeur et une enveloppe de protection disposée autour de la gaine, le diamètre du coeur $D_k$ étant compris entre $200.10^{-6}$ m et $800.10^{-6}$ m, caractérisée par le fait que pour conserver dans une large mesure la structure de mode

a) le profil d'indice de réfraction dans le coeur suit sensiblement la loi des puissances

$$n_k^2(r) = n_{ki}^2 - (n_{ki}^2 - n_{ka}^2)*(2*r/D_k)^g,$$

r étant la distance par rapport à l'axe de la fibre, $n_{ki}$ l'indice de réfraction dans l'axe de la fibre et $n_{ka}$ l'indice de réfraction au niveau de l'interface avec la gaine, avec $n_{ki} > n_{ka}$,
b) $D_k$ est égal à au moins 2,5 fois $(o'*\lambda)/\sqrt{\Delta n_k}$, $o'$ prenant la valeur 5 lorsque l'ordre maximal du mode du rayonnement laser $o$ est inférieur à 5, $o' = o$ lorsque $o$ est compris entre 5 et 20, ou $o' = 4,5*\sqrt{o}$ lorsque $o$ est supérieur à 20, $\sqrt{\Delta n_k}$ étant la racine de la différence d'indice de réfraction $\Delta n_k$ dans le coeur et $\lambda$ étant la longueur d'onde du rayonnement laser à transmettre,
c) l'exposant g est compris entre 1,4 et 3,0 et par le fait que
d) la différence d'indice de réfraction dans le coeur, $\Delta n_k = n_{ki} - n_{ka}$ est supérieure à $1,6 * 10^{-3}$.

**2.** Fibre optique selon la revendication 1, caractérisée par le fait que le diamètre du coeur $D_k$ est situé dans la plage comprise entre $300*10^{-6}$ m et $600*10^{-6}$ m.

**3.** Fibre optique selon la revendication 1 ou la revendication 2, caractérisée par le fait que $\Delta n_k$ est supérieur à $3,3*10^{-3}$.

**4.** Fibre optique selon au moins une des revendications 1 à 3, caractérisée par le fait que $D_k$ est égal à au moins 5 fois' $(o'*\lambda)/\sqrt{\Delta n_k}$, $o'$ prenant la valeur 3 lorsque $o$ est inférieur à 3, $o' = o$ lorsque $o$ est compris entre 3 et 20 ou $o' = 4,5*\sqrt{o}$ lorsque $o$ est supérieur à 20.

**5.** Fibre optique selon au moins une des revendications 1 à 4, caractérisée par le fait que $D_k$ est égal à au moins 8 fois $(o'*\lambda)/\sqrt{\Delta n_k}$, $o'$ prenant la valeur 3 lorsque $o$ est inférieur à 3, $o' = o$ lorsque $o$ est compris entre 3 et 20.

**6.** Fibre optique selon au moins une des revendications 1 à 5, caractérisée par le fait que l'exposant g est compris entre 1,6 et 2,4 lorsque l'ordre maximal du mode $o \leq 10$ et est compris entre 1,8 et 2,2 lorsque $o > 10$.

**7.** Fibre optique selon au moins une des revendications 1 à 6, caractérisée par le fait que $\Delta_{nk}$ est inférieur à $4*10^{-4}*(D_k/\lambda)^2/o^2$, $D_k$ étant le diamètre du coeur de la fibre, $\lambda$ la longueur

d'onde du rayonnement et $o$ l'ordre maximal du mode du rayonnement (avec $o > 1$).

**8.** Fibre optique selon au moins une des revendications 1 à 7, caractérisée par le fait que $\Delta_{nk}$ est inférieur à $2*10^{-5}*(D_k/\lambda)^2/o^2$.

**9.** Fibre optique selon au moins une des revendications 1 à 8 pour la transmission d'un rayonnement présentant une longueur d'onde $\lambda$ dans la plage comprise entre $250*10^{-9}$ m et $2*10^{-6}$ m, caractérisée par le fait que la différence d'indice de réfraction $\Delta n_k$ est inférieure à $20*10^{-3}$.

**10.** Fibre optique selon au moins une des revendications 1 à 9 pour la transmission d'un rayonnement présentant une longueur d'onde $\lambda$ dans la plage comprise entre $250*10^{-9}$ m et $2*10^{-6}$ m, caractérisée par le fait que la différence d'indice de réfraction $\Delta n_k$ est inférieure à $10*10^{-3}$.

**11.** Fibre optique selon au moins une des revendications 1 à 10, caractérisée par le fait que l'exposant g est inférieur à 1,95 ou supérieur à 2,05.

**12.** Fibre optique selon au moins une des revendications 1 à 11, caractérisée par le fait que l'exposant g est inférieur à 1,90 ou supérieur à 2,10.

**13.** Fibre optique selon au moins une des revendications 1 à 12, caractérisée par le fait qu'une couche formant gaine, d'une épaisseur d'au moins $10*10^{-6}$ m, est appliquée sur le coeur, gaine à l'intérieur de laquelle l'indice de réfraction est au maximum égal à l'indice de réfraction minimal dans le coeur.

**14.** Fibre optique selon la revendication 13, caractérisée par le fait que l'épaisseur de la couche formant gaine appliquée sur le coeur est d'au moins $50*10^{-6}$ m.

**15.** Fibre optique selon la revendication 13 ou la revendication 14, caractérisée par le fait que le profil d'indice de réfraction au niveau de l'interface coeur-gaine est lisse ou que, lorsque l'indice de réfraction dans la couche formant gaine appliquée directement sur le coeur est sensiblement constante, l'indice de réfraction dans ladite couche est inférieur d'au moins $1*10^{-3}$ à l'indice de réfraction minimal dans le coeur.

**16.** Fibre optique selon la revendication 15, caractérisée par le fait que lorsque le profil d'indice de réfraction au niveau de l'interface coeur-gaine est lisse, l'indice de réfraction dans la couche formant gaine appliquée directement sur le coeur décroît radialement de l'intérieur vers l'extérieur avec une différence d'indice de réfraction d'au moins $2*10^{-3}$.

**17.** Fibre optique selon au moins une des revendications 13 à 16, caractérisée par le fait qu'une seconde couche formant gaine d'une épaisseur d'au moins $7*10^{-6}$ m est appliquée sur la première couche formant gaine et par le fait que l'indice de réfraction entre la première couche formant gaine et la seconde couche formant gaine décroît d'au moins $1,5*10^{-3}$.

**18.** Fibre optique selon au moins une des revendications 1 à 17 pour la transmission d'un rayonnement présentant une longueur d'onde $\lambda$ dans la plage comprise entre $250*10^{-9}$ m et $2*10^{-6}$ m, caractérisée par le fait que le coeur est constitué de verte de $SiO_2$ pur, sans tenir compte d'impuretés en quantité négligeable, dopé au fluor et par le fait que le dopage au fluor dans le coeur croît de l'intérieur vers l'extérieur.

**19.** Fibre optique selon la revendications 18, caractérisée par le fait que les couches de la gaine situées le plus à l'intérieur sont constituées de verte de $SiO_2$ pur, sans tenir compte d'impuretés en quantité négligeable, dopé au fluor et au $B_2O_3$.

Fig. 1

Fig. 2

Fig. 3